(19) Europäisches Patentamt
European Patent Office
Office européen des brevets

(11) **EP 3 193 152 A1**

(12) **EUROPEAN PATENT APPLICATION**

(43) Date of publication:
**19.07.2017 Bulletin 2017/29**

(51) Int Cl.:
***G01M 17/04*** *(2006.01)*

(21) Application number: **16151447.6**

(22) Date of filing: **15.01.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Vysoké Ucení Technické V Brne 601 90 Brno (CZ)**

(72) Inventors:
• **Mazurek, Ivan
602 00 Brno-Ponava (CZ)**
• **Klapka, Milan
665 01 Rosice (CZ)**

(74) Representative:
**Rausch.Wanischeck.Brinkmann.Intellectual Property
Am Seestern 8
40547 Düsseldorf (DE)**

(54) **METHOD OF MEASURING DAMPING RATIO OF UNSPRUNG MASS OF HALF AXLES OF PASSENGER CARS USING A SUSPENSION TESTING RIG WITHOUT DISASSEMBLING**

(57) The invention relates to the method of measurement of damping ratio $b_{rodhad}$ of unsprung mass of half axles of passenger cars using the computational apparatus of a suspension testing rig without disassembling including the calculation of the value of a relative down pressure of the wheel to the test platform at the resonance of the suspension; the evaluation of the phase shift of the signal of pressure force of the wheel to the test platform behind the signal of the excitation stroke at the resonance of the suspension; and the quantification of damping ratio $b_{rodhad}$ of unsprung mass of half axles on the basis of a phase shift in the area of the resonance frequency. The invention also relates to a suspension testing rig without disassembling for measuring damping ratio $b_{rodhad}$ of unsprung mass of half axles connected with a computer with a control program containing a computational apparatus designed to quantify damping ratio $b_{rodha}$ of unsprung mass of half axles. The value of the excitation amplitude in the middle of swing frame (3) is 1.25 mm.

Fig. 1

**Description**

Field of the invention

The invention relates to a method of measuring damping ratio of unsprung mass of half axles of passenger cars using a suspension testing rig without disassembling.

Background of the invention

The technical condition of the car chassis has a crucial influence on driving behaviour of a car and thus affects the overall traffic safety. Especially a shock absorber, which is an important element of suspension, requires periodic inspection due to limited lifetime. Lengthy disassembling and assembling of the shock absorber have led in the past to the introduction of non-destructive testing of the entire spring and damping system directly on the vehicle, without disassembling.

The most widespread are resonance testers, equipped with vibrating platforms to vibrate the wheel of the tested suspension. The measured quantity is either the pressure force of the wheel to the platform, or the amplitude of the platform. Another category includes pulse tail testers, working on the principle of analysing the pulse tail of the swaying car body. The vertical vibrations of the vehicle body are induced by impact and evalution of the damping of this movement is made subsequently.

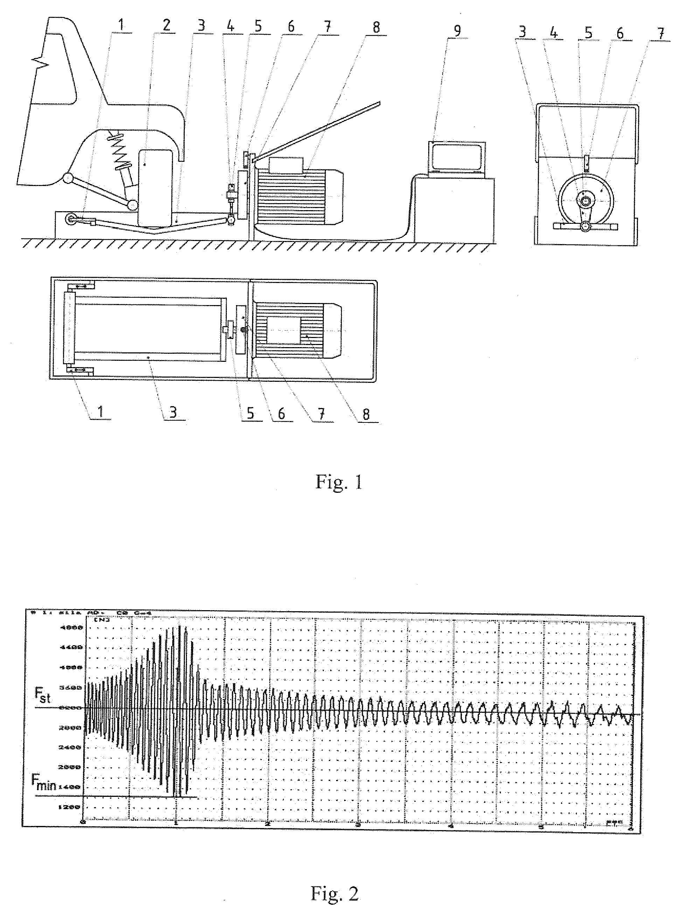

To unify the testing methodology in assessing the technical condition of shock absorbers, the international association of manufacturers of shock absorbers EUSAMA established uniform test conditions [1]. Under these conditions, a vertically vibrating platform of an active tester, on which the measured wheel is placed, simulates road irregularity and simultaneously records the pressure force of the wheel to the platform. After the drive is turned off, the frequency of the platform movement fluently decreases from 25 Hz to the stop. Figure 2 shows a graphical record of the pressure force evaluated.

The record clearly demonstrates how the pressure force of the wheel to the road decreases to the minimum of $F_{min}$ when passing through the natural frequency of the suspension. With regard to the natural frequencies of passenger car axles it is necessary to use an excitation electric motor with operating speed 1500 RPM (i.e. 25 Hz). The result of the test then includes the smallest value ot the down pressure of the wheel to the platform $F_{min}$ during the test. The specification recommends expressing the relative value of this variable (EUS) relative to the static value of the $F_{st}$ pressure force:

$$EUS = \frac{100 . F_{min}}{F_{st}} \quad (1)$$

This technically and economically challenging design, which requires an accurate dynamic strain-gauge balance for both wheels of the axle, allows for very simple and yet very accurate evaluation of the result, which comprises only the calculation of the relative load on the wheel near its natural frequency. In the kinematic excitation using the agreed constant amplitude, the result of the test conducted in this way represents an objectively comparable classification of wheel damping. The method assesses the degree of wheel grip as a basic functional feature of the suspension, regardless of the causes for its decreasing.

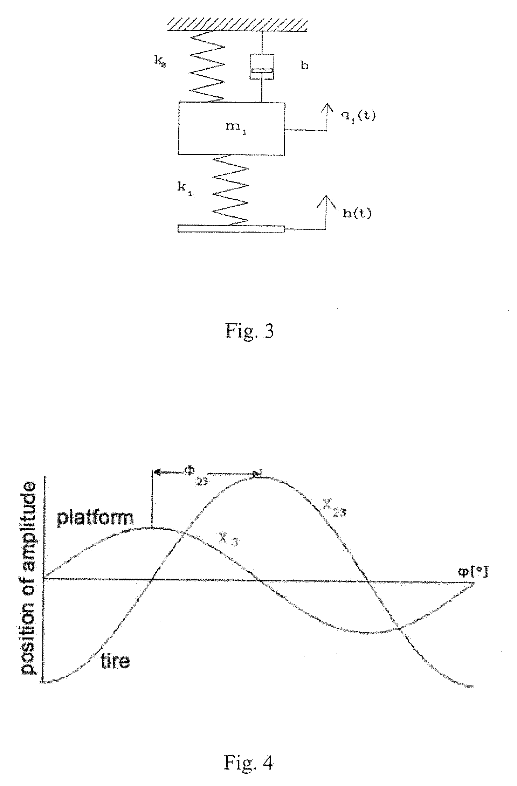

A simplified dynamic model of this device is based on the fact that in the area of natural frequency of the test platform, the amplitude of oscillation of the sprung part of the vehicle is practically negligible. This means that the vertical oscillation of the axle can be replaced - with a certain inaccuracy - in the area of the resonance frequency with a simple model with kinematic excitation (Fig. 3), where mass $m_1$ represents the unsprung mass of the axle; stiffness $k_1$ is determined by the stiffness of the tire, and $k_2$ is the suspension stiffness. The quality of damping is described by damping constant b of the hydraulic shock absorber.

Another criterion that can be applied at EUSAMA testers is damping ration $b_r$, which is usually used to evaluate the ability of the shock absorber to fulfil its purpose.

Damping ratio $b_r$ for the system in Fig. 3 is defined as follows:

$$b_r = \frac{b}{2 \cdot \sqrt{(k_1 + k_2) \cdot m_1}} \quad (2)$$

The value of $b_r = 0.1$ is generally considered the limit value of the damping ratio. Below this value, damping is considered as insufficient. The damping ratio is an understandably and clearly defined parameter, and it is therefore suitable as an additional criterion to EUSAMA; not only for its clarity, but also for a possibility of determining it from data measured on the EUSAMA testers.

The problem of resonance testers is that the measurement does not involve only the shock absorber, but the entire wheel suspension. With regard to these facts, the result of the EUSAMA methodology is usually significantly dependent on other factors, such as the instantaneous mass of the vehicle or its proportion and distribution between the sprung and unsprung mass on the measured wheel. Another of the negative elements is also the type and pressure of the tires used, the working temperature of the shock absorber, and the ambient temperature.

A case may occur, when a car with a defective shock absorber with a higher total weight exerts a greater pressure force on the platform than a light vehicle with a good shock absorber. When measuring on the rear axle using the EUSAMA methodology, even new cars show unsatisfactory results, even though driving properties and the technical condition of these cars are all right. Other problematic cases have been observed also in the upper middle class cars, such as BMW 5 series, X6 or Lexus SC430, where unsatisfactory EUSAMA tests had a common feature: the run-flat tires used. For these known vehicles, it was necessary to create an additional criterion that would evaluate the function of the shock absorber regardless of a EUSAMA parameter.

Phase shift $\Phi_{23}$ can be defined as an angular difference between the phases of vibrating platform $X_3$ (the absolute sinusoidal wave of the vibration plate position) and the phase of the force contact of the tire with vibrating platform $X_{23}$ (the sinusoidal wave of the vertical contact of the force acting on the vibrating platform by the tire).

The kinematic equation of the system with kinematic excitation with one degree of freedom shown in Fig. 2 can be written as follows:

$$m_1 \cdot q_1'' + b \cdot q_1' + (k_1 + k_2) \cdot q_1 = k_1 h(t) \qquad (3)$$

Equation (3) can be converted into the frequency form of the record:

$$\left[ m_1 \cdot (i\omega)^2 + b \cdot (i\omega) + k_1 + k_2 \right] \cdot q_1(\omega) = k_1 h(\omega) \qquad (4)$$

From this equation, transfer function W ($\omega$) can be expressed between the reformation of the tire and the stroke of the tester:

$$W(\omega) = \frac{k_1 - \left[ m_1 \cdot (i\omega)^2 + b \cdot (i\omega) + k_1 + k_2 \right]}{\left[ m_1 \cdot (i\omega)^2 + b \cdot (i\omega) + k_1 + k_2 \right]} \qquad (5)$$

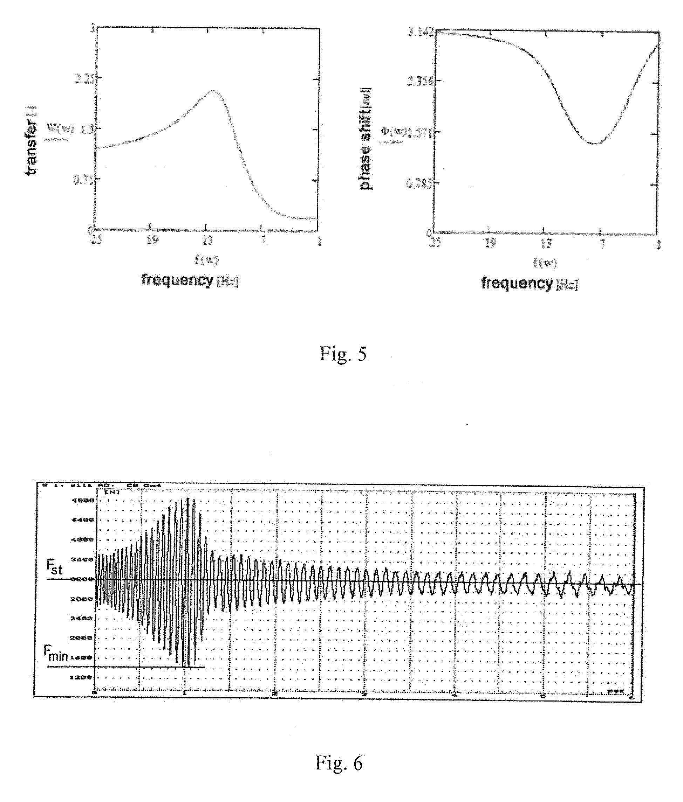

The course of this complex function can be graphically described by two courses of real functions: absolute value function $|W(\omega)|$ and phase shift function $\Phi(\omega)$. An example of the course for the model from Fig. 3 is in Fig. 5.

A disadvantage of resonance testers used so far is a relatively high value of a commonly-used excitation amplitude, which was introduced in the 70s of the last century, when the road conditions were much worse. For vehicles designed for modern roads, an insoluble problem often occurs during testing, when the value of 3 mm of the excitation amplitude of the tester swing frame, recommended by the EUSAMA standard, is too high, and it may not be possible to test some cars.

References:

1. EUSAMA - Recommendations for a performance test specification of an "on car" vehicle suspension testing system, TS-02-76

2. PRAŽÁK, F.: Shock Absorber as an element affecting driving behaviour of a car. Doctoral thesis. Bmo, Brno University of Technology

3. Hortová P.: A virtual model of resonance adhesion test of wheel suspension according to EUSAMA. Thesis, 2009. Institute of Design, Faculty of Mechanical Engineering, Brno University of Technology

Summary of the invention

Shortcomings of the testers used are solved in a suspension testing rig without disassembling for the verification of damping of half axles of passenger cars, including an appropriate test methodology. The system also addresses the issue of reducing acquisition and operating costs.

The subject of the invention is a method of measuring damping ratio $b_{rodhad}$ of unsprung mass of half axles of passenger cars using the computational apparatus of a suspension testing rig without disassembling, comprising the calculation of the value of relative down pressure of the wheel to the testing platform at the resonance of the suspension, subsequent evaluation of the phase shift of the signal of the pressure force of the wheel to the testing platform behind the signal of the excitation stroke at the resonance of the suspension, and - on the basis of the phase shift in the area of resonance frequency - the quantification of damping ratio $b_{rodhad}$ of unsprung mass of the half axle.

The subject of the invention is also the suspension testing rig without disassembling for measuring damping ratio $b_{rodhad}$ of unsprung mass of half axles of passenger cars using the method according to the invention in verifying the damping of these half axles. Each of the pins on one end of the swing frame of the tester is connected to one load cell, and the second end of the frame is hung by means of a connecting rod with swing bearings on the eccentric mounted on the overhung end of the shaft of the electric motor. A flywheel and a dead centre sensor are also mounted on the shaft of the electric motor. The tester is connected with a computer with a control program and with an analogue to digital converter; the computer contains the control program with a computational apparatus designed to quantify damping ratio of unsprung mass $b_{rodhad}$ of a half axle. The value of the excitation amplitude in the middle of the tester's swing frame is 1.25 mm.

The resonance suspension testing rig without disassembling for the verification of damping of half axles of passenger cars according to the invention consists of an oscillating base consisting only of a swing frame. The swing frame is bent in the middle, which facilitates the placing of the wheel of the tested suspension to its centre. Each of the arms of the swing frame is connected to the load cell at one end; and the connection of second ends of the frame is suspended by means of a connecting rod with swing bearings on the eccentric mounted on the overhung end of the shaft of the electric motor. On the shaft of the electric motor, a flywheel with a shape mark is also mounted; the shape mark is used for sensing the dead centre of the excitation mechanism using the dead centre sensor in the form of an inductive sensor, mounted on the flywheel. The flywheel will ensure the run-down test to be performed after the electric motor is turned off. The electric motor is connected with a computer with a control program and with an analogue to digital converter; the control program of the computer contains a computational apparatus intended to quantify an additional criterion, which is damping ratio $b_{rodhad}$ of unsprung mass of a half axle. The sensor of the dead centre of the excitation stroke allows measuring the phase delay of the signal of the force behind the signal of the excitation stroke. By its analyses, an additional criterion of the damping ratio of unsprung mass can be evaluated.

The diagnostic system of passenger car chassis according to the invention solves the diagnostics of damping capabilities of wheel suspensions, especially shock absorbers of passenger cars. In the area of software, it allows the use of model analysis techniques.

The oscillating swing frame of the tester represents an accurate strain-gauge balance, able to measure the pressure force of the wheel 1000timers per second. Further signal processing is carried out through a personal computer with a control program and with an analogue to digital (A/D) convertor.

All these electronic devices are completely independent of a high-voltage electrical system and are powered from the control computer. Once the computer control program records the turning off of the electric motor, it begins to transmit the signal from the strain-gauge sensor of forces to the memory.

This provides the course of the pressure force of the wheel to the test platform (Fig. 2). The signal must be digitally filtered by an appropriately set low-pass filter, and an absolute value of the envelope of this curve must be analyzed. The effort to achieve high amplitude accuracy eliminated the use of the FFT frequency analysis. The problem is dealt with by direct detection of the envelope curve. Angular frequencies $\omega$ corresponding to these points are measured in parallel with the analysis of the points of the envelope.

When designing the vibration unit, the simple leverage model of a vibrating test platform was chosen. The essence of the design was to make the test conditions as similar to operating conditions as possible. The value of 6 mm of the excitation stroke of the test platform, recommended by EUSAMA, was therefore reduced to 2.5 mm, which is a double of the excitation amplitude in the middle of the swing frame of the tester according to the invention. This reduction also has a positive effect on steady behaviour of the vehicle during the test. The functional diagram of the tester is shown in Figure 1. It is a concept of a small mobile unit for a test on a single wheel, which is characterized by its simple mechanical design, operating reliability, and low production cost. These parameters predetermine the system for flexible use, especially in confined spaces of smaller shops. Instead of the usual, but massy platform on a parallelogram suspension, the vibrating base only consists of a swing frame suspended by means of a connecting rod with swing bearings on the eccentric mounted on the overhung end of the shaft of the electric motor. The advantage of this concept is a very low natural weight of the vibrating system of the tester and its high rigidity (Fig. 6). These features ensure high accuracy of the results measured.

The suspension testing rig without disassembling according to the invention is a simple mobile excitation unit with a reduced stroke as opposed to the stroke used in the EUSAMA methodology. The evaluation program corrects, by computation, the reduced stroke to determine the universally comparable criterion according to the EUSAMA prescription. It uses an additional criterion for the assessment of controversial situations: the coefficient of the damping ratio of the unsprung mass, calculated from the measured signal of the phase shift between the force and the excitation stroke.

The methodology of processing the measured signal

The subject of the invention is the methodology for processing the measured signal. The essence of the diagnostic approach shown here is an extension of the actual control program of the tester by a computational apparatus designed to enumerate the additional criterion - the damping ratio of the half axle unsprung mass ($b_{rodhad}$). This criterion is needed, for example, in a situation when a new car - after the installation of unsuitable tires - shows poor results using a EUSAMA methodology.

The evaluation algorithm works in two basic levels. In the basic function, it complies with the conditions of assessing the overall condition of the axle according to EUSAMA. The effect of the changed excitation stroke is corrected computationally, so the results of measuring are fully comparable with the results of testers from other manufacturers.

First, it is necessary to computationally correct the changed excitation stroke of the tester so that the results are comparable with other testers in this category. Equation (1) is thus modified by the correction of the dynamic component of the force to:

$$EUS = \frac{100(F_{st} - 2.4(F_{st} - F_{min}))}{F_{st}} \qquad (6)$$

The mathematical system for calculating the additional damping criterion is installed above this layer. The course of absolute value functions $|W(\omega)|$ and phase shift $\Phi(\omega)$ is dependent on all design parameters of the axle including damping b. Technically, it is not a problem to measure the phase shift of the force signal behind the excitation signal. It is further described how the value of the damping ratio of suspension $b_r$ can be acquired from the phase shift. The function of the phase shift from the transfer from equation (5) can be written in the form

$$\Phi(\omega) = arctg\left[\frac{\omega \cdot b \cdot k_1}{(\omega^2 \cdot m_1 - k_2) \cdot (k_1 + k_2 - \omega^2 \cdot m_1) - \omega^2 \cdot b^2}\right] \qquad (7)$$

In the area of the resonance frequency of system $\Omega$, this equation can be simplified by the application of equation $\Omega^2 = (k_1 + k_2)/m_1$ for calculating the resonance angular frequency:

$$\Phi(\Omega) = arctg\left[\frac{k_1}{b \cdot \sqrt{\frac{k_1 + k_2}{m_1}}}\right] = arctg\left[\frac{k_1}{2 \cdot b_r \cdot (k_1 + k_2)}\right] \qquad (8)$$

where $b_r$ is a dimensionless parameter of the damping ratio, which will serve as the searched additional criterion.

$$b_r = \frac{k_1}{2 \cdot (k_1 + k_2) \cdot tg(\Phi(\Omega))} \qquad (9)$$

During a routine test, design parameters $k_1$ and $k_2$ in this equation are not known, but because tire stiffness $k_1$ is always significantly greater than the stiffness of wheel spring $k_2$, for the estimation of $b_{rodhad}$, a simplifying consideration that $k_1 \sim (k_1 + k_2)$ can be used. Then:

$$b_{rodhad} = \frac{1}{2 \cdot tg(\Phi(\Omega))} \qquad (10)$$

The method uses the measured signal of the phase shift of the signal of the force behind the excitation signal, and is fully automated. It has resolved a problem of failures of the EUSAMA methodology, often discussed in Europe, when below-limit results of the down pressure are measured even in new cars.

Brief description of drawings

Fig. 1: Schematic sketch of the diagnostic system of the tester
Fig. 2: The course of the pressure force of the wheel to the test platform when passing through resonance
Fig. 3: The dynamic model of the tester near resonance of unsprung mass $m_1$
Fig. 4: Illustration of the phase shift
Fig. 5: The course of the transfer function and the phase delay depending on frequency
Fig. 6: The course of the pressure force of the wheel after turning off the electric motor

The invention is further described by way of an example of an embodiment, which does not limit other possible embodiments within the scope of the claims.

Examples of preferred embodiments

Embodiment 1

Testing of damping of a half axle of an older vehicle, type S 795 Felicia, using the suspension testing rig without disassembling, and processing the measured signal.

To test the damping of the half axle, a suspension testing rig without disassembling according to the invention was used, consisting of a vibrating base comprising only a swing frame 3. Swing frame $\underline{3}$ was bent in the middle, which facilitated the fitting of the wheel of the tested suspension to its centre. Each of the arms of swing frame $\underline{3}$ was connected on one end with one load cell $\underline{1}$, and the connection of second ends of frame $\underline{3}$ was suspended using connecting rod $\underline{6}$ with swing bearings on eccentric $\underline{5}$, mounted on the overhung end of the shaft of electric motor 8. On the shaft of electric motor $\underline{8}$, also flywheel $\underline{7}$ with a shape mark was mounted; the shape mark was used to sense the dead centre of the excitation mechanism using dead centre sensor $\underline{6}$ in the form of an inductive sensor. Flywheel $\underline{7}$ ensured the run-down test to be performed after turning electric motor $\underline{8}$ off. Electric motor $\underline{8}$ was connected with computer $\underline{9}$ with a control program and an analogue to digital convertor; the control program of computer $\underline{9}$ contained computational apparatus designed to determine damping ratio $b_{rodhad}$ of unsprung mass of a half axle.

The tested wheel of the vehicle was positioned into a hollow in the middle of swing frame $\underline{3}$ of the tester with an excitation amplitude of 1.25 mm, and electric motor $\underline{8}$ was run for 5 s. As soon as the control program of computer $\underline{9}$ recorded the turning off of electric motor $\underline{8}$, signals from load cells $\underline{1}$ started to be transmitted to the memory. The course of the pressure force of the wheel to the test platform when passing through resonance was thus acquired (Figure 2). Then the EUSAMA basic criterion of adhesion was evaluated using equation (1).

The signal was digitally filtered using computer 9 by an appropriately set low-pass filter, and direct detection of envelope curve 2 was carried out. The absolute value of the envelope of this curve was analyzed, and concurrently with the analysis of the points of the envelope, values of angular frequency $\Phi(\Omega)$ corresponding to these points were determined, as well as the values of phase delay $(\omega)$ of the signal of force behind the signal of excitation at resonance in each turn of the eccentric.

Then in the second phase, the analysis was performed of the signal of the phase delay of the signal of the pressure force of the wheel to the test platform behind the signal of the excitation stroke at the resonance of the suspension. Important is the value of the phase shift at the frequency during which EUSAMA reaches the minimum value. From this value of the shift, damping ratio $b_{rodhad} = 0.2$ of unsprung mass of the half axle was quantified using equation (10).

Industrial applicability

The diagnostic system of the suspension testing rig without disassembling as a new product in the area of garage equipment presents a compact, simple structure for verification of damping ratio of half axles of passenger cars to be used especially in confined spaces of smaller shops. The unit is characterized by operational reliability and low manufacturing cost. The computational apparatus of the computer control system, enabling the quantification of damping ratio $b_{rodhad}$ of unsprung mass of half axles as an additional criterion of damping of half axles, solves the problem of EUSAMA methodology failures, when below-limit results of down pressure might be measured even in new cars.

List of reference numerals

1 - load cells
2 - tested suspension
3 - swing frame
4 - connecting rod
5 - eccentric
6 - sensor of dead centre
7 - flywheel
8 - electric motor
9 - PC with analogue to digital converter

**Claims**

1. The method of measuring damping ratio $b_{rodhad}$ of unsprung mass of half axles of passenger cars using a computational apparatus of the suspension testing rig without disassembling, **characterized in that** it comprises the following steps:

   a) calculating a value of the relative down pressure of the wheel to the test platform at the resonance of the suspension;
   b) evaluating a phase shift of the signal of the pressure force of the wheel to the test platform behind the signal of the excitation stroke at the resonance of the suspension;
   c) based on the phase shift in the area of resonance frequency, quantifying damping ratio $b_{rodhad}$ of unsprung mass of the half axle

2. The suspension testing rig without disassembling for measuring damping ratio $b_{rodhad}$ of unsprung mass of half axles of passenger cars using the method according to Claim 1 in verifying the damping ratio of these half axles, **characterized in that** each of the pins on one end of swing frame (3) of the tester is connected to one load cell (1), and the second end of frame (3) is suspended by means of connecting rod (4) with swing bearings on eccentric (5), mounted on the overhung end of the shaft of electric motor (8), where on the shaft of electric motor (8), flywheel (7) and dead centre sensor (6) are also mounted, and the tester is connected with computer (9) containing a control program and an analogue to digital converter, where computer (9) contains a control program with a computational apparatus designed to quantify damping ratio $b_{rodha}$ of unsprung mass of half axles, and the value of the excitation amplitude in the middle of swing frame (3) of the tester is 1.25 mm.

Fig. 1

Fig. 2

Fig. 3

Fig. 4

Fig. 5

Fig. 6

**EP 3 193 152 A1**

Europäisches
Patentamt

European
Patent Office

Office européen
des brevets

# EUROPEAN SEARCH REPORT

Application Number

EP 16 15 1447

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 647 843 A2 (BUZZI CARLO [IT]) 12 April 1995 (1995-04-12) * page 2, line 43 - line 54 * * page 3, line 16 - page 6, line 5 * * figure 1 * ----- | 1,2 | INV. G01M17/04 |
| A | Przemyslaw Magda ET AL: "MAINTENANCE ON DEMAND FOR VEHICLE SUSPENSION SYSTEM", ) MAGDA, UHL, Maintenance On Demand For Vehicle Suspension System 57, 1 January 2013 (2013-01-01), XP055286779, Retrieved from the Internet: URL:http://yadda.icm.edu.pl/baztech/elemen t/bwmeta1.element.baztech-c1b3b615-44d3-4f fb-91f0-cbd3974f2b13/c/Magda.pdf [retrieved on 2016-07] * the whole document * ----- | 1,2 | |
| A | JOSÉ A. CALVO ET AL: "Procedure to verify the suspension system on periodical motor vehicle inspection", INTERNATIONAL JOURNAL OF VEHICLE DESIGN, vol. 63, no. 1, January 2013 (2013-01), page 1, XP055286781, GB ISSN: 0143-3369, DOI: 10.1504/IJVD.2013.055497 * the whole document * ----- | 1,2 | TECHNICAL FIELDS SEARCHED (IPC) G01M |

The present search report has been drawn up for all claims

| Place of search | Date of completion of the search | Examiner |
|---|---|---|
| The Hague | 7 July 2016 | Reto, Davide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 15 1447

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2016

| Patent document cited in search report | | Publication date | Patent family member(s) | | Publication date |
|---|---|---|---|---|---|
| EP 0647843 | A2 | 12-04-1995 | DE | 69411840 D1 | 27-08-1998 |
| | | | DE | 69411840 T2 | 15-04-1999 |
| | | | EP | 0647843 A2 | 12-04-1995 |
| | | | ES | 2122119 T3 | 16-12-1998 |
| | | | IT | CO930013 A1 | 11-04-1995 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Shock Absorber as an element affecting driving behaviour of a car. **PRAŽÁK, F.** Doctoral thesis. Bmo, Brno University of Technology

- A virtual model of resonance adhesion test of wheel suspension according to EUSAMA. **HORTOVÁ P.** Thesis. Institute of Design, Faculty of Mechanical Engineering, 2009